# EUROPÄISCHE PATENTANMELDUNG

(11) **EP 2 703 095 A1**
(43) Veröffentlichungstag der Anmeldung: **05.03.2014**
(21) Anmeldenummer: 13401089.1
(22) Anmeldetag: 23.08.2013
(51) Int. Cl.: B08B 9/093, A01M 7/00

(54) **Landwirtschaftliche Feldspritze**

(30) Priorität: 31.08.2012 DE 102012108074; 21.11.2012 DE 102012111198
(71) Anmelder: Amazonen-Werke H. Dreyer GmbH & Co. KG, 49205 Hasbergen (DE)
(72) Erfinder: Austermann, Stefan, 48291 Telgte (DE)

(57) **Zusammenfassung**

Landwirtschaftliche Feldspritze mit zumindest einem die auszubringende Spritzbrühe aufnehmenden Flüssigkeitstank (1), zumindest einer angetriebenen Flüssigkeitspumpe (23), zumindest einer Dosiereinrichtung mit zumindest einer zugeordneten Ausbringleitung und zumindest einer dem Flüssigkeitstank zu dessen Innenreinigung nach dessen Entleerung zumindest eine über eine Flüssigkeitspumpe (23) mit einer unter Druck stehenden Reinigungsflüssigkeit zu beaufschlagenden und im Flüssigkeitstank angeordneten Reinigungsdüse (27, 31, 37), aus der die Reinigungsflüssigkeit in Richtung der Innenwand des Flüssigkeitstanks austritt, aufweisenden Reinigungseinrichtung. Um in einfacher Weise es zu ermöglichen, dass mittels der von den Innenreinigungsdüsen ausgebrachten Reinigungsflüssigkeit auch unter schwierigen Bedingungen eine gute Innenreinigung des Flüssigkeitstanks in kurzer Zeit erreicht werden kann, ist vorgesehen, dass die der Reinigungseinrichtung zugeordnete Flüssigkeitspumpe als Hochdruckpumpe und die zumindest eine im Flüssigkeitstank angeordnete Reinigungsdüse als Hochdruckdüse zur Erzeugung eines Hochdruckflüssigkeitsdruckes von zumindest 100 bar, vorzugsweise zwischen 150 und 240 bar, mittels welchem der zumindest eine Hochdruckflüssigkeitsstrahl und/oder-fächer aus der zumindest einen Hochdruckdüse austritt, ausgebildet sind.

## Beschreibung

Die Erfindung betrifft eine landwirtschaftliche Feldspritze gemäß des Oberbegriffes des Patentanspruches 1.

Derartige landwirtschaftliche Feldspritzen sind in der Praxis bekannt geworden. Diese Feldspritzen weisen einen Flüssigkeitstank auf. In diesem Flüssigkeitstank ist zu dessen Innenreinigung eine zumindest eine Reinigungsdüse aufweisende Reinigungseinrichtung angeordnet. Die Reinigungseinrichtung ist an den von der motorisch angetriebenen Pumpe erzeugten unter Druck stehenden Flüssigkeitsstromkreis angeschlossen. Von diesem Flüssigkeitsstromkreis wird der Reinigungsdüse zur Innenreinigung Flüssigkeit zugeführt. Die Reinigungsflüssigkeit tritt aus den Reinigungsdüsen mit einem Druck aus, der in etwa dem Spritzdruck von bis etwa 10 bar entspricht. Unter schwierigen Bedingungen dauert der Reinigungsvorgang bis zur Erreichung eines guten Reinigungsergebnisses bisher relativ lange.

Der Erfindung liegt die Aufgabe zu Grunde, in einfacher Weise es zu ermöglichen, dass mittels der von den Innenreinigungsdüsen ausgebrachten Reinigungsflüssigkeit auch unter schwierigen Bedingungen eine gute Innenreinigung des Flüssigkeitstanks auch in verkürzter Zeit erreicht werden kann.

Diese Aufgabe wird erfindungsgemäß dadurch gelöst, dass die der Reinigungseinrichtung zugeordnete Flüssigkeitspumpe als Hochdruckpumpe und die zumindest eine Reinigungsdüse als Hochdruckdüse zur Erzeugung eines Hochdruckflüssigkeitsdruckes von zumindest 100 bar, vorzugsweise zwischen 150 und 240 bar, mittels welchem der zumindest eine Hochdruckflüssigkeitsstrahl und/oder-fächer aus der zumindest einen Hochdruckdüse austritt, ausgebildet sind.

Infolge dieser Maßnahmen erzeugt die Hochdruckpumpe für die als Hochdruckdüse ausgebildete Reinigungsdüse einen hohen Flüssigkeitsdruck, so das aus der Reinigungsdüse die Reinigungsflüssigkeit mit einem Druck von zumindest 100 bar, vorzugsweise zwischen 150 und 240 bar austritt. Die Reinigungsdüse ist fest im Inneren des Flüssigkeitstanks installiert. Mit dem unter einem hohen Druck aus der Reinigungsdüse austretenden Flüssigkeitstrahl und/oder -fächer wird eine schnelle und gute Innenreinigung des Flüssigkeitstanks erreicht.

Um eine gute Reinigung der Innenwand des Flüssigkeitstanks zu erreichen, ist vorgesehen, dass der aus der zumindest einen Reinigungsdüse austretende Hochdruckflüssigkeitsstrahl und/oder-fächer gegen die Innenwand des Flüssigkeitstanks gerichtet ist.

Um bei den vorkommenden Einsatzverhältnissen eine gute Innenreinigung zu erreichen, ist vorgesehen, dass der zumindest eine Hochdruckflüssigkeitsstrahl und/oder-fächer unter einen Winkel zwischen 10 und 120° zur Innenwand des Flüssigkeitstanks aus der zumindest einen Reinigungsdüse austritt.

Um möglichst den gesamten Bereich des Flüssigkeitstanks in automatischer Weise reinigen zu können, ist vorgesehen, dass der Reinigungsvorrichtung eine Dreh- und/oder Bewegungseinrichtung, mittels welcher die zumindest eine Reinigungsdüse der Reinigungsvorrichtung gegenüber den Innenwänden des Flüssigkeitstanks dreh- und/oder bewegbar ist, angeordnet ist.

Die Bewegung der Reinigungsdüse lässt sich dadurch erreichen, dass die Dreh- und/oder Bewegungseinrichtung einen motorischen Antrieb aufweist.

Eine einfache Ausgestaltung der Dreh- und/oder Bewegungseinrichtung lässt sich dadurch erreichen, dass die Dreh- und/oder Bewegungseinrichtung von der unter Hochdruck stehenden Reinigungsflüssigkeit gebildet wird und die Reinigungsdüse in Drehung und/oder Bewegung gegenüber den Innenwänden des Flüssigkeitstanks setzt.

In einer weiteren Ausgestaltung ist vorgesehen, dass die Reinigungsvorrichtung zumindest einen Zielstrahlreiniger mit zumindest einer Reinigungsdüse, aus der mehrere Punktstrahlen austreten, aufweist.

Um auch bei schwierigen Verhältnissen entlegene zu reinigende Bereiche des Flüssigkeitstanks gut reinigen zu können, ist vorgesehen, dass die zumindest eine Reinigungsdüse der Reinigungsvorrichtung mittels zumindest einer eine Flüssigkeitszuleitung enthaltenen Verlängerungshalterung beabstandet zu der Dreh- und/oder Bewegungsanordnung der Reinigungseinrichtung angeordnet ist.

Bei einer weiteren landwirtschaftlichen Feldspritze mit zumindest einem die auszubringende Spritzbrühe aufnehmenden Flüssigkeitstank, zumindest einer angetriebenen Flüssigkeitspumpe, zumindest einer Dosiereinrichtung mit zumindest einer zugeordneten Ausbringleitung und zumindest einer dem Flüssigkeitstank zu dessen Innenreinigung nach dessen Entleerung zumindest eine über eine Flüssigkeitspumpe mit einer unter Druck stehenden Reinigungsflüssigkeit zu beaufschlagenden Reinigungsdüse, aus der die Reinigungsflüssigkeit in Richtung der Innenwand des Flüssigkeitstanks austritt, aufweisenden Reinigungseinrichtung, ist vorgesehen, dass die Reinigungsvorrichtung zumindest einen Zielstrahlreiniger mit zumindest einer Reinigungsdüse, aus der mehrere Punktstrahlen austreten, aufweist.

Infolge dieser Maßnahme können besonders schwierige Bereiche des Flüssigkeitstanks zielgerichtet gereinigt werden.

Um hier auch entlegene Bereiche des Flüssigkeitstank gut erreichen zu können, ist vorgesehen, dass die zumindest eine Reinigungsdüse der Reinigungsvorrichtung mittels zumindest einer eine Flüssigkeitszuleitung enthaltenen Verlängerungshalterung beabstandet zu der Dreh- und/oder Bewegungsanordnung der Reinigungseinrichtung angeordnet ist.

Um die Reinigungsdüsen für eine optimierte Reinigung überwachen und/oder gezielt ansteuern zu können, ist vorgesehen, dass im Bereich der Reinigungsdüsen Sensoren zur Ermittlung der jeweiligen Position und/oder Stellung der Reinigungsdüsen vorgesehen sind.

Um sicherzustellen, dass der Flüssigkeitstand in gewünschter Weise vollständig gereinigt wird, ist vorgesehen, dass die Reinigungsdüsen über eine elektrische oder elektronische Steuereinrichtung derart ansteuer- und/oder steuerbar sind, dass eine vollständige Reinigung und/oder Bearbeitung der zu reinigenden Oberfläche der Innenwand der Flüssigkeitstanks durchgeführt wird.

In manchen Einsatzfällen ist es wünschenswert noch weitere Hochdruckreinigungseinrichtungen in einfacher Weise an die Hochdruckflüssigkeitseinrichtung anschließen zu können. Hierzu ist vorgesehen, dass die Reinigungseinrichtung handelsübliche Kupplungen und/oder Schlauchverbinder zum Anschluss weiterer Reinigungsvorrichtungen an die Hochdruckleitung oder Hochdruckpumpe aufweist.

Weitere Einzelheiten der Erfindung sind der Beispielsbeschreibung und den Zeichnungen zu entnehmen. Hierbei zeigen
- Fig. 1: den Flüssigkeitsplan einer Feldspritze in Prinzipdarstellung,
- Fig. 2: den für die Innenreinigung bestimmten Teilbereich des Flüssigkeitsplanes gemäß Fig. 1,
- Fig. 3: den für die Innenreinigung bestimmten Teilbereich entsprechend des Flüssigkeitsplans gemäß Fig. 1 mit einer anderen Ausgestaltung des Innenreinigungssystems,
- Fig. 4: das Innenreinigungssystem gemäß Fig.3 in vergrößertem Maßstab und
- Fig. 5: ein weiteres Innenreinigungssystem entsprechend der Darstellungsweise nach Fig.3.

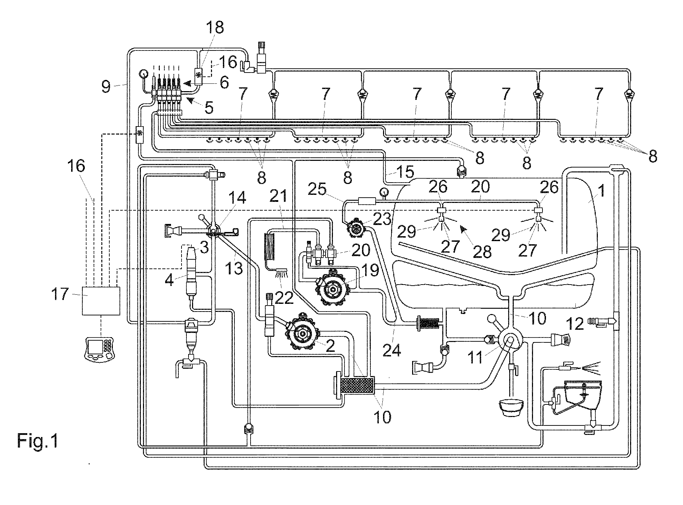

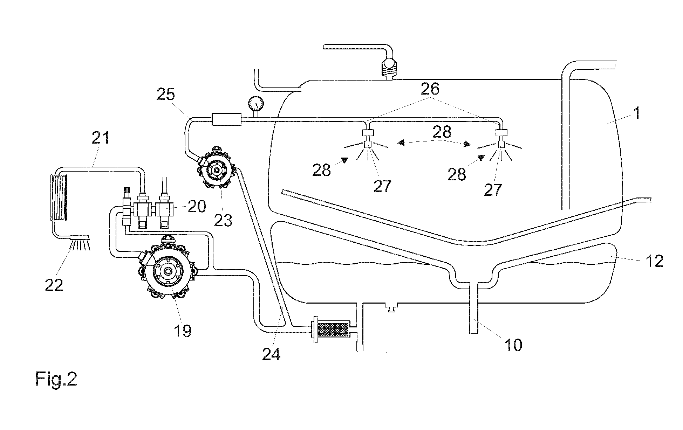

Die Feldspritze gemäß den Fig.1 und 2 weist unter anderem einen Flüssigkeitstank 1 zur Aufnahme der auszubringenden Pflanzenschutzmittelbrühe, eine motorisch angetriebene Pumpe 2, ein über einen Stellmotor 3 einstellbares Regelventil 4 aufweisende Dosierarmatur, die Teilbreitenschaltventile 5 mit den motorischen Einstellgliedern 6, die zu den einzelnen Teilbreitenleitungen 7 mit Spritzdüsen 8 bestückten Verteilergestänge führende Spritzleitung 9 auf.

Auf der Saugseite der Pumpe 2 ist die Saugleitung 10 angeschlossen, die unter Zwischenschaltung eines zentralen Umschaltventils 11 im unteren Bereich des Flüssigkeitstank 1 mündet. An dem Umschaltventil 11 können noch weitere Leitungen zum externen Anschluss von Wassertanks, Vorrichtungen zum Ansaugen von Wasser aus Gewässern, zum Anschluss des Klarwasserbehälters 12 sowie eine Ablaufleitung angeschlossen sein. Auf der Druckseite der Pumpe 2 ist eine Druckleitung 13 angeordnet, die unter Zwischenschaltung eines weiteren Umschaltventils 14 zu dem Regelventil 4 der Dosierarmatur und weiterer Einrichtungen der Feldspritze führt. Die verschiedenen Rücklaufleitungen sind zu einer Sammelrücklaufleitung 15 zusammengefasst. Die Rücklaufleitung 15 mündet in dem Vorratstank 1.

In der von den dem Regelventil 4 zu den Teilbreitenleitungen 7 führenden Spritzleitung 9 ist der über die Signalleitung 16 mit der elektronischen Steuer- und/oder Regeleinrichtung 17 verbundene Durchflussmesser 18 angeordnet.

Unterhalb des Flüssigkeitstanks 1 ist der Klarwasserbehälter 12 zur Aufnahme von Klarwasser angeordnet. Diesem Klarwasserbehälter 12 ist eine zweite Pumpe 19, Regelventile 20 sowie die von den Regelventilen 20 abgehende Reinigungsleitung 21 einer Reinigungseinrichtung 22 für die Außenreinigung des Flüssigkeitstanks 1 auf.

Die Feldspritze weist für die Innenreinigung des Flüssigkeitstanks 1 eine weitere als Hochdruckpumpe 23 ausgebildete Flüssigkeitspumpe auf. Die Saugleitung 24 der Hochdruckpumpe 23 ist mit dem Klarwasserbehälter 12 verbunden. Auf der Druckseite der Hochdruckpumpe 23 ist die in dem Flüssigkeitstank 1 ausmündende Druckleitung 25 angeschlossen. Im Inneren des Flüssigkeitstanks 1 sind an den Auslassungsöffnungen 26 der Hochdruckleitung 25, als Hochdruckdüsen 27 ausgebildete Reinigungsdüsen der Reinigungseinrichtung 28 angeordnet. Die Hochdruckpumpe 23 und die Hochdruckdüsen 27 sind so ausgelegt, dass sie zur Erzeugung eines Hochdruckflüssigkeitsdruckes von zumindest 100 bar, vorzugsweise zwischen 150 und 250 bar, mittels welchem der zumindest eine aus den Reinigungsdüsen 27 austretende Hochdruckflüssigkeitsstrahl 29 und/oder -fächer aus der zumindest einen Hochdruckdüse 27 austritt, entsprechende Flüssigkeitsdrücke erzeugen. Die aus den Reinigungsdüsen 27 austretende Hochdruckflüssigkeitsstrahl 29 und/oder - fächer ist gegen die Innenwand des Flüssigkeitstanks 1 gerichtet, um die jeweilige Innenwand des Flüssigkeitstanks 1 so reinigen. Der aus den Reinigungsdüse 27 austretende Hochdruckflüssigkeitsstrahl und/oder -fächer tritt beispielsweise unter einem Winkel zwischen 10° und 120° zur Innenwand des Flüssigkeitstanks 1 aus den Reinigungsdüsen 27 aus.

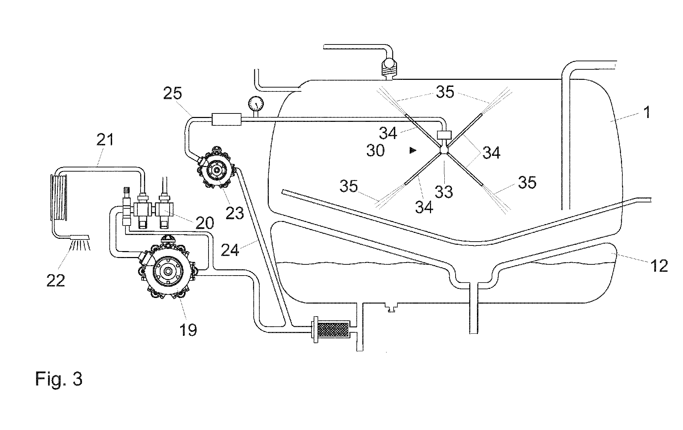

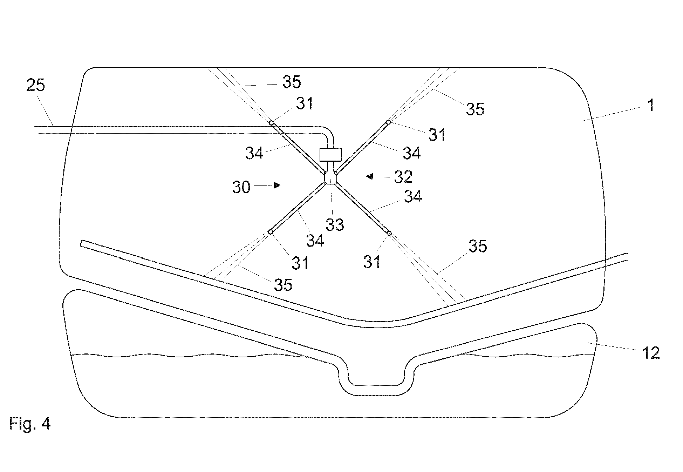

Die in dem Flüssigkeitsplan gemäß der Fig.3 und 4 dargestellten Reinigungseinrichtung 30 weist mehrere Reinigungsdüsen 31 auf, welche in dem Innenbereich des Flüssigkeitstanks 1 angeordnet und an der Reinigungsleitung 25 angeschlossen ist, und mittels einer nicht näher dargestellten Dreh- und/oder Bewegungseinrichtung 32 gegenüber den Innenwänden des Flüssigkeitstanks 1 dreh- und/oder bewegbar ist.

Diese Reinigungsvorrichtung 30 unterscheidet sich von dem vorhergehenden Ausführungsbeispiel dadurch, dass die jeweiligen Reinigungsdüsen 31 der drehbar angetriebenen Reinigungseinrichtung 30 an der drehbar angetriebenen Mittelhalterung 33 der Dreh- und/oder Bewegungseinrichtung 32 jeweils über eine Flüssigkeitszuleitung enthaltene Verlängerungshalterung 34 beabstandet zu der Dreh- und/oder Bewegungsanordnung 32 der Reinigungsvorrichtung 30 angeordnet sind.

Die Dreh- und/oder Bewegungseinrichtung 32 weist einen motorischen Antrieb auf. Hierbei kann der motorische Antrieb der Dreh- und/oder Bewegungseinrichtung 32 von der unter Hochdruck stehenden Reinigungsflüssigkeit gebildet sein und die Reinigungsdüse 31 in Drehung und/oder Bewegung gegenüber den Innenwänden des Flüssigkeitstanks setzen. Die Reinigungsdüse 31 ist hier Bestandteil eines Zielstrahlreinigers, wobei aus der Reinigungsdüse 31 mehrere Punktstrahlen 35 austreten.

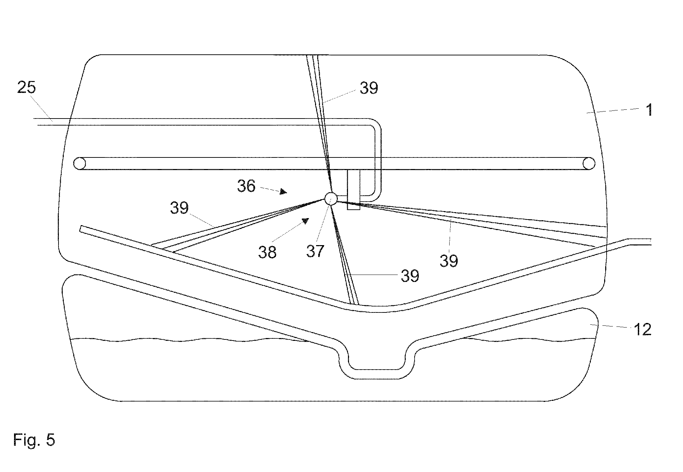

Die in dem Flüssigkeitsplan gemäß der Fig.5 dargestellte Reinigungseinrichtung 36 weist eine Reinigungsdüse 37 auf, welche in dem Innenbereich des

Flüssigkeitstanks 1 angeordnet und an der Reinigungsleitung 25 angeschlossen ist, und mittels einer nicht näher dargestellten Dreh- und/oder Bewegungseinrichtung 38 gegenüber den Innenwänden des Flüssigkeitstanks 1 dreh- und/oder bewegbar ist. Diese Reinigungsvorrichtung 36 unterscheidet sich von dem Ausführungsbeispiel gemäß Fig. 1 und 2 dadurch, dass die Reinigungsdüsenöffnungen der drehbar angetriebenen Reinigungsdüse 37 drehbar angetrieben und in einem Winkel zur Radialen angestellt sind. Hierbei kann die Reinigungsdüse 37 Bestandteil eines Zielstrahlreinigers sein, wobei aus der Reinigungsdüse 37 mehrere Punktstrahlen 39 austreten.

Weiterhin können in nicht dargestellter Weise im Bereich der Reinigungsdüsen Sensoren zur Ermittlung der jeweiligen Position und/oder Stellung der Reinigungsdüsen vorgesehen sein. Somit sind die Reinigungsdüsen für eine optimierte Reinigung zu überwachen und/oder gezielt anzusteuern.

Weiterhin sind die Reinigungsdüsen in nicht dargestellter Weise über eine elektrische oder elektronische Steuereinrichtung derart ansteuer- und/oder steuerbar sind, dass eine vollständige Reinigung und/oder Bearbeitung der zu reinigenden Oberfläche der Innenwand der Flüssigkeitstanks durchgeführt wird. So lässt sich sicherzustellen, dass der Flüssigkeitstand in gewünschter Weise vollständig gereinigt wird.

In manchen Einsatzfällen ist es wünschenswert noch weitere Hochdruckreinigungseinrichtungen in einfacher Weise an die Hochdruckflüssigkeitseinrichtung anschließen zu können. Hierzu weist die Reinigungseinrichtung in nicht dargestellter Weise handelsübliche Kupplungen und/oder Schlauchverbinder zum Anschluss weiterer Reinigungsvorrichtungen an die Hochdruckleitung oder Hochdruckpumpe auf.

## Patentansprüche

1. Landwirtschaftliche Feldspritze mit zumindest einem die auszubringende Spritzbrühe aufnehmenden Flüssigkeitstank, zumindest einer angetriebenen Flüssigkeitspumpe, zumindest einer Dosiereinrichtung mit zumindest einer zugeordneten Ausbringleitung und zumindest einer dem Flüssigkeitstank zu dessen Innenreinigung nach dessen Entleerung zumindest eine über eine Flüssigkeitspumpe mit einer unter Druck stehenden Reinigungsflüssigkeit zu beaufschlagenden und im Flüssigkeitstank angeordneten Reinigungsdüse, aus der die Reinigungsflüssigkeit in Richtung der Innenwand des Flüssigkeitstanks austritt, aufweisenden Reinigungseinrichtung, **dadurch gekennzeichnet, dass** die der Reinigungseinrichtung (28, 30, 37) zugeordnete Flüssigkeitspumpe (23) als Hochdruckpumpe und die zumindest eine im Flüssigkeitstank (1) angeordnete Reinigungsdüse (27, 31, 37) als Hochdruckdüse zur Erzeugung eines Hochdruckflüssigkeitsdruckes von zumindest 100 bar, vorzugsweise zwischen 150 und 240 bar, mittels welchem der zumindest eine Hochdruckflüssigkeitsstrahl (28, 35, 39) und/oder-fächer aus der zumindest einen Hochdruckdüse (27, 31, 37) austritt, ausgebildet sind.

2. Landwirtschaftliche Feldspritze nach Anspruch 1, **dadurch gekennzeichnet, dass** der aus der zumindest einen Reinigungsdüse (27, 31, 37) austretende Hochdruckflüssigkeitsstrahl (28, 35, 39) und/oder-fächer gegen die Innenwand des Flüssigkeitstanks (1) gerichtet ist.

3. Landwirtschaftliche Feldspritze nach zumindest einem der vorstehenden Ansprüche, **dadurch gekennzeichnet, dass** der zumindest eine Hochdruckflüssigkeitsstrahl (28, 35, 39) und/oder-fächer unter einen Winkel zwischen 10 und 120° zur Innenwand des Flüssigkeitstanks (1) aus der zumindest einen Reinigungsdüse (27, 31, 37) austritt.

4. Landwirtschaftliche Feldspritze nach zumindest einem der vorstehenden Ansprüche, **dadurch gekennzeichnet, dass** der Reinigungsvorrichtung eine Dreh- und/oder Bewegungseinrichtung (32), mittels welcher die zumindest eine Reinigungsdüse (31, 37) der Reinigungsvorrichtung (30, 36) gegenüber den Innenwänden des Flüssigkeitstanks (1) dreh- und/oder bewegbar ist, angeordnet ist.

5. Landwirtschaftliche Feldspritze nach zumindest einem der vorstehenden Ansprüche, **dadurch gekennzeichnet, dass** die Dreh- und/oder Bewegungseinrichtung (32) einen motorischen Antrieb aufweist.

6. Landwirtschaftliche Feldspritze nach zumindest einem der vorstehenden Ansprüche, **dadurch gekennzeichnet, dass** die Dreh- und/oder Bewegungseinrichtung (32) von der unter Hochdruck stehenden Reinigungsflüssigkeit (31, 37) gebildet wird und die Reinigungsdüse in Drehung und/oder Bewegung gegenüber den Innenwänden des Flüssigkeitstanks (1) setzt.

7. Landwirtschaftliche Feldspritze nach zumindest einem der vorstehenden Ansprüche, **dadurch gekennzeichnet, dass** die Reinigungsvorrichtung (28, 30, 37) zumindest einen Zielstrahlreiniger mit zumindest einer Reinigungsdüse (27, 31, 37), aus der mehrere Punktstrahlen (28, 35, 39) austreten, aufweist.

8. Landwirtschaftliche Feldspritze nach zumindest einem der vorstehenden Ansprüche, **dadurch gekennzeichnet, dass** die zumindest eine Reinigungsdüse (31) der Reinigungsvorrichtung (30) mittels zumindest einer eine Flüssigkeitszuleitung (25) enthaltenen Verlängerungshalterung (34) beabstandet zu der Dreh- und/oder Bewegungsanordnung (33) der Reinigungseinrichtung (30) angeordnet ist.

9. Landwirtschaftliche Feldspritze mit zumindest einem die auszubringende Spritzbrühe aufnehmenden Flüssigkeitstank, zumindest einer angetriebenen Flüssigkeitspumpe, zumindest einer Dosiereinrichtung mit zumindest einer zugeordneten Ausbringleitung und zumindest einer dem Flüssigkeitstank zu dessen Innenreinigung nach dessen Entleerung zumindest eine über eine Flüssigkeitspumpe mit einer unter Druck stehenden Reinigungsflüssigkeit zu beaufschlagenden im Flüssigkeitstank angeordneten Reinigungsdüse, aus der die Reinigungsflüssigkeit in Richtung der Innenwand des Flüssigkeitstanks austritt, aufweisenden Reinigungseinrichtung, **dadurch gekennzeichnet, dass** die Reinigungsvorrichtung (28, 30, 37) zumindest einen Zielstrahlreiniger (27, 31, 37) mit zumindest einer im Flüssigkeitstank (1) angeordneten Reinigungsdüse, aus der mehrere Punktstrahlen (29, 35, 39) austreten, aufweist.

10. Landwirtschaftliche Feldspritze nach Anspruch 9, **dadurch gekennzeichnet, dass** die zumindest eine Reinigungsdüse (31) der Reinigungsvorrichtung (30) mittels zumindest einer eine Flüssigkeitszuleitung (25) enthaltenen Verlängerungshalterung (34) beabstandet zu der Dreh- und/oder Bewegungsanordnung (33) der Reinigungseinrichtung (30) angeordnet ist.

11. Landwirtschaftliche Feldspritze nach zumindest einem der vorstehenden Ansprüche, **dadurch gekennzeichnet, dass** im Bereich der Reinigungsdüsen Sensoren zur Ermittlung der jeweiligen Position und/oder Stellung der Reinigungsdüsen vorgesehen sind.

12. Landwirtschaftliche Feldspritze nach zumindest einem der vorstehenden Ansprüche, **dadurch gekennzeichnet, dass** die Reinigungsdüsen über eine elektrische oder elektronische Steuereinrichtung derart ansteuer- und/oder steuerbar sind, dass eine vollständige Reinigung und/oder Bearbeitung der zu reinigenden Oberfläche der Innenwand der Flüssigkeitstanks durchgeführt wird.

13. Landwirtschaftliche Feldspritze nach zumindest einem der vorstehenden Ansprüche, **dadurch gekennzeichnet, dass** die Reinigungseinrichtung handelsübliche Kupplungen und/oder Schlauchverbinder zum Anschluss weiterer Reinigungsvorrichtungen an die Hochdruckleitung oder Hochdruckpumpe aufweist.
